# EUROPEAN PATENT APPLICATION

(11) **EP 1 693 426 A1**
(43) Date of publication of application: **23.08.2006**
(21) Application number: 04819410.4
(22) Date of filing: 25.11.2004
(51) Int. Cl.: C09D 11/02, G02B 5/20, G02F 1/1335

(54) **RED INK COMPOSITION FOR COLOR FILTER**

(30) Priority: 28.11.2003 JP 2003399293
(71) Applicant: Kabushiki Kaisha Ueno Seiyaku Oyo Kenkyujo, Osaka-shi, Osaka 541-0043 (JP)
(72) Inventor: UENO, Ryuzo, Nishinomiya-shi, Hyogo 6620038 (JP); OTANI, Junji, Kobe-shi, Hyogo 6570016 (JP); YAMASHITA, Tetsuya, Kobe-shi, Hyogo 6511321 (JP); HISANO, Takaya 11, Ueno Seiyaku, Nishinomiya-shi, Hyogo 6620066 (JP)
(74) Representative: Albrecht, Thomas
(86) International application number: PCT/JP2004/017495
(87) International publication number: WO 2005/052074

(57) **Abstract**

Disclosed is a red ink composition for color filter, comprising a monoazo compound represented by formula [I]: 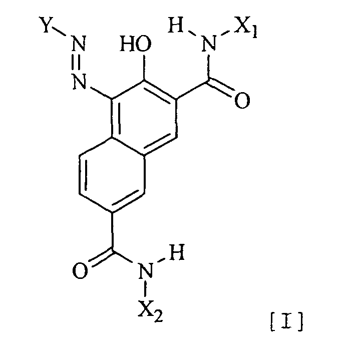 wherein, X₁, X₂ and Y are selected from the group consisting of an optionally substituted aromatic group and an optionally substituted heterocyclic group having conjugated double bonds,
a resin component and a solvent.

## Description

### TECHNICAL FIELD

The instant invention relates to a red ink composition for color filter.

### BACKGROUND ART

In these days, smaller, thinner and lighter image display devices are desired. Demands for liquid crystal color display devices have been increased for various use including personal computer displays, televisions and game machines.

A liquid crystal color display is composed of a transparent substrate, and mounted thereon a color filter having color elements of three primary colors, R(red), G(green) and B(Blue) or Y(yellow), M(magenta) and C(cyan) and a black color matrix for shielding light.

The conventionally used color filter for liquid crystal display have been manufactured by preparing a pattern on the transparent substrate by means of photolithographic method using aqueous solution of a natural polymer such as gelatin or casein containing a photosensitizing agent such as bichromates, and staining the pattern three times with dyes of different colors to give a transparent filter with the pattern of the three primary colors.

The colored pattern obtained with dyes, however, do not exhibit enough heat- and light-resistance and color filters obtained with organic pigments with good heat- and light-resistance have been proposed. Color filters with organic pigments have been manufactured by, for example, photolithographic method using compositions comprising the organic pigments dispersed in photosensitive resins, offset- or ink-jet-printing method using ink compositions comprising the organic pigments.

Examples of organic pigments which are proposed to be used for manufacturing red color filter include anthraquinones, diketopyrrolopyrroles, quinacridones, isoindolines, perinones, perylenes, condensed azo pigments. They are excellent in heat- and light-resistance but are hardly dispersed in the color filters in general and a highly transparent red color filter was hardly obtained.

In order to solve the above described problems, one of the instant inventors had proposed to use a monoazo compound obtained by the coupling procedure using a coupler of 2-hydroxynaphthalene-3,6-dicarboxylic acid derivative having at least one alkylaminocarbonyl group as a red pigment (see patent reference 1).

The diamide type azo compound induced from 2-hydroxynaphthalene-3,6-dicarboxylic acid disclosed in the patent reference 1 is differ from the diamide type azo compound disclosed in the instant application in that at least one of the amide groups in the reference is aliphatic amide while both of the amide groups in this application are aromatic- or heterocyclic-amides.
Patent Reference 1 WO00/023525

### DESCRIPTION OF THE INVENTION

### PROBLEMS TO BE SOLVED BY THE INVENTION

An object of the present invention is to provide a red ink composition for color filter which can be used to provide a highly transparent color filter with outstanding heat and light resistance and the pigment contained in which is dispersed well.

Another object of the invention is to provide a highly transparent color filter with excellent spectroscopic properties that is obtainable by using the above-discussed red ink composition.

### MEANS FOR SOLVING THE PROBLEM

The present invention provides a red ink composition for color filter comprising; a monoazo compound represented by formula [1]: 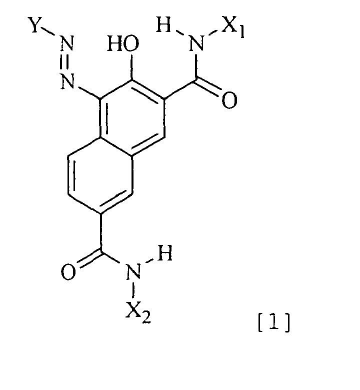 wherein, X₁, X₂ and Y are selected from the group consisting of an optionally substituted aromatic group and an optionally substituted heterocyclic group having conjugated double bonds,
a resin component and a solvent.

"Aromatic group" represents a 6-membered mono-cyclic aromatic group or condensed ring group consisting of up to 4 of 6-membered aromatic rings.

"Heterocyclic group having conjugated double bonds" represents a 5- or 6- membered mono-cyclic group or condensed ring group having at least one hetero-atom selected from N, S and O and conjugated double bonds. When it represents a condensed ring group, said group may have up to 6 rings.

In the monoazo compound represented by formula [1], X₁ and X₂ are selected from the group consisting of an optionally substituted aromatic group and an optionally substituted heterocyclic group having conjugated double bonds. X₁ and X₂ may be same or different and the compound wherein X₁ and X₂ are same is preferable due to the good heat and light resistance and good dispersion property of the resulting pigment.

Examples of the optionally substituted aromatic groups may include phenyl, naphthyl and anthraquinonyl groups. Examples of the optionally substituted heterocyclic group having conjugated double bonds may include thiophene, furan, pyrrole, imidazole, pyrazole, isothiazole, isoxazole, pyridine, pyrazine, pyrimidine, pyridazine, triazole, tetrazole, indole, 1H-indazole, purine, 4H-quinolizine, isoquinoline, quinoline, phthalazine, naphthyridine, quinoxaline, quinazoline, cinnoline, pteridine and benzofuran groups.

Among the above, the compounds wherein X₁ and X₂ are selected from phenyl and naphthyl groups are preferable for the good thermal and light resistance as well as good dispersibility of the resulting pigment.

Examples of the possible substituents on the above aromatic and heterocyclic groups may include halogen atom, halogenated C1-8 alkyl, nitro, C1-8 alkyl, C1-8 alkoxy such as methoxy, cyano, phenoxy, amino, pyrimidylamino, benzoylamino, sulfonic acid, hydroxy, esterified carboxyl such as alkoxycarbonyl and phenoxycarbonyl, amidated carboxyl such as aminocarbonyl and phenylaminocarbonyl, alkylaminosulfonyl and a C2-8 alkenyl which may optionally have an aryl group. When the substituent contains an aromatic ring group, said ring may have one or more further substituents such as halogen atom, C1-8 alkyl, C1-8 alkoxy, phenyl and cyano.

In the monoazo compound of the present invention represented by formula [1], Y is a group selected from optionally substituted aromatic group and optionally substituted heterocyclic group having conjugated double bonds. Examples of the aromatic and heterocyclic groups and the substituents thereon may include the same groups as shown above as examples of X₁ and X₂.

The method for preparing the azo compound of formula [1] is not specifically limited. For example, the procedure disclosed in Japanese Patent No. 3393869 may be employed. In detail, diazotizing an amine represented by formula [2], and coupling the diazonium compound with a 2-hydroxynaphthalene-3,6-dicarboxylic acid derivative of formula [3]. The coupler compound represented by formula [3] below may be prepared by the method disclosed in Japanese Patent No. 3228516 or the like.

[Chemical Formula 2]

Y-HN₂ [2]

### [Chemical Formula 3]

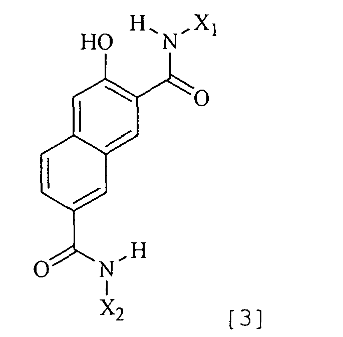

In formulae [2] and [3], X₁, X₂ and Y are the same as defined in formula [1].

Examples of amines represented by formula [2] may include aniline, o-nitroaniline, m-nitroaniline, p-nitroaniline, o-toluidine, m-toluidine, p-toluidine, 2-methyl-5-nitroaniline, 2-methyl-4-nitroaniline, 2-methoxy-5-chloroaniline, 2-methoxy-4-nitroaniline, 2-methoxy-5-nitroaniline, 2-nitro-4-chloroaniline, 2-methyl-4-chloroaniline, 2,3-xylidine, 2,4-xylidine, 2,5-xylidine, 2,6-xylidine, 3,4-xylidine, 3,5-xylidine, o-anisidine, m-anisidine, p-anisidine, o-chloroaniline, m-chloroaniline, p-chloroaniline, 2,5-dichloroaniline, 2,4,5-trichloroaniline, 4-aminobenzamide, 3-amino-4-methoxybenzanilide, 4-N,N-dimethylaminoaniline, 4-N,N-diethylaminoaniline, 4-anilinoaniline, 4-amino-4'-methoxydiphenylamine, 5-aminophthalimide, 5-aminobenzimidazolone, 2-methoxy-4-benzoylaminoaniline, 4-benzoylamino-2,5-diethoxyaniline, 4-benzoylamino-2,5-dimethoxyaniline, 4-benzoylamino-5-methoxy-2-methylaniline, methyl anthranilate, n-butyl anthranilate and 3-amino-4-methoxy-N,N-diethyl-benzenesulfonamide.

Upon preparing the red ink composition of the present invention, the monoazo compound prepared as above may be added directly to the composition or the compound may be dispersed at a temperature 60-150°C in an organic solvent selected from alcohols and aprotic polar solvents before adding to the composition. In the latter case, the organic solvent used in the dispersing step may be an alcohol such as methanol, 2-propanol and n-butanol, or aprotic polar solvent such as N,N-dimethylformamide, N,N-dimethylacetamide, dimethylsulfoxide or pyridine. Among those organic solvents, N,N-dimethylformamide and dimethylsufoxide are preferably used. The monoazo compound dispersed in an organic solvent under heat will provide pigment with superior light- and weather-resistance than those do not dispersed.

The monoazo compound of formula [1] may be processed mechanically, for example, by means of kneading or millimg before adding to the composition.

The red ink composition of the present invention may contain two or more monoazo compounds represented by formula [1]. Together with the compound of formula [1], the composition may further comprise one or more other pigment selected from the group consisting of monoazo, disazo, benzimidazolone, condensed azo, azo lake, anthraquinon, diketopyrrolopyrrole, quinacridone, isoindoline, isoindolinone, perinone, perylene and the like pigments, and/or a derivative thereof in so far as they do not impair the object of the instant invention. When the composition of the invention comprises a pigment other than that of formula [1], the total amount of the other pigments in the ink composition is preferably equal to or less than 50 wt%, more preferably, equal to or less than 20wt% of the total amount of the pigments in the composition.

In the instant specification, the phrase "monoazo compound of formula [1]" represents not only one compound represented by formula [1] but also two or more compounds represented formula [1] as well as a combination of a compound of formula [1] and a pigment other than formula [1].

Examples of the resin components contained in the red ink composition for color filter of the present invention may include photosensitive resins and/or thermosetting resins, and photosensitive resins are especially preferable.

As photosensitive resins, a polymer or a copolymer of a polymerizable compound having at least one ethylenical double bond, such as acrylic ester, methacrylic ester, urethaneacrylate, urethanemethacrylate, acrylic amide, methacrylic amide, alkylacrylate, benzylmethacrylate, benzylacrylate, aminoalkylmethacrylate, aminoalkylacrylate, allyl ester and vinyl ester. Those photosensitive resins are added as monomer or oligomer in the red ink composition of the present invention.

In the case where a photosensitive resin is used as a resin component, the composition may comprise a photopolymerization initiator together with the monomer and/or oligomer of the photosensitive resins. Examples of photopolymerization initiators may include derivatives of benzophenone, acetophenone, benzoin, benzoin ether, thioxanthone, anthraquinone, naphthoquinone and triazine. In addition to the photopolymerizaition initiator, a known photosensitizer may be added to the red ink composition of the invention.

Examples of the thermosetting resins may include melamine, urea, alkyd, epoxy, phenol and cyclopentadien resins.

In the specification and claims of the application, "photosensitive resin" and "thermosetting resin" refer not only to the already set resins but also to polymerizable monomer and/or oligomers.

In addition to the above described photosensitive and/or thermosetting resins, the ink composition of the present invention may further comprise the other resin components generally used in ink compositions such as a binder resin having an acid group, acrylic and urethane resins.

Examples of the solvents used in the ink composition of the present invention may include fatty acid esters such as ethyl acetate, butyl acetate, ethyleneglycolmonomethylether acetate and propyleneglycolmonomethylether acetate; ketones such as acetone, methylethyl ketone, methylisobutyl ketone, cyclohexanone and diacetone alcohol; aromatic compounds such as benzene, toluene and xylene; alcohols such as methanol, ethanol, n-propanol, isopropanol and n-butanol; glycols such as ethylene glycol, diethylene glycol, triethylene glycol, tetraethylene glycole, polyethylene glycol, propylene glycol, dipropylene glycol, tripropylene glycol, polypropylene glycol, trimethylene glycol and hexanetriol; glycerine; alkyleneglycolmonoalkyl ethers such as ethyleneglycolmonomethyl ether, ethyleneglycolmonoethyl ether, diethyleneglycolmonomethyl ether, diethyleneglycolmonoethyl ether, propyleneglycolmonomethyl ether, and propyleneglycolmonoethyl ether; alkyleneglycoldialkyl ethers such as triethyleneglycoldimethyl ether, triethyleneglycoldiethyl ether, tetraethyleneglycoldimethyl ether and tetraethyleneglycoldiethyl ether; ethers such as tetrahydrofuran, dioxian and diethyleneglycoldiethyl eter; alkanolamines such as monoethanolamine, diethanolamine and triethanolamine; nitrogen containing organic solvents such as N,N-dimethylformamide, N,N-dimethylacetoamide, N-methyl-2-pyrroridone, 2-pyrrolidone and 1,3-dimethyl-2-imidazolidinone; and water.

Among the above solvents, water soluble organic solvents may be used as an water base medium by admixing with water. Two or more of the above solvents other than water may be mixed and used as oil base medium.

The amount of the monoazo compound of formula [1] or, in the case where the other pigment is added together with that of formula [1], the total amount of the pigments in the red ink composition of the present invention per one part by weight of the resin component may be 0.01-2 parts by weight, especially 0.1-1 part by weight.

The present invention further provides a red color filter which can be obtained by using the ink composition of the present invention. Thus obtained red color filter exhibits an excellent optical transmittance.
In particular, optical transmittance at 650nm may preferably be 85% or more, especially 90% or more.

The red color filter of the present invention may be manufactured by means of any known method and preferably, by means of the photolithographic or ink-jet method. The details of those methods are illustrated below.

1) Photolithographic method
In order to manufacture a color filter by means of the photolithographic method, a photosensitive resin is employed as resin component in the red ink composition of the present invention for color filter. The photosensitive resin in the form of monomer and/or oligomer is added to the ink composition as its resin component together with a photopolymerization initiator, and the resin component will be set upon application of light to give film coated on the transparent support.

The photosensitive resin in this context may be the above described polymer or copolymer of a polymerizable monomer having at least one ethylenical double bond.

As polymerizable monomers of the photosensitive resins, acrylic ester or methacrylic esters are especially preferable. Examples may include methylacrylate, methylmethacrylate, butylmethacrylate, butylacrylate, pentaerythritoltetraacrylate, pentaerythritoltetramethacrylate, pentaerythritoltriacrylate, pentaerythritoltrimethacrylate, dipentaerythritolhexaacrylate, dipentaerythritolhexamethacrylate, dipentaerythritolpentaacrylate, dipentaerythritolpentamethacrylate, glyceroldiacrylate, glyceroldimethacrylate, 1,4-butandioldiacrylate, 1,4-butandioldimethacrylate, bisphenol A diacrylate and bisphenol A dimethacrylate.

In the case of the photolithographic method is employed, the red ink composition of the invention comprises a binder resin having an acidic group, in addition to the above described photosensitive resin. Examples of binder resins having an acidic group may include those having carboxyl, hydroxy and sulfonic acid groups, and those having carboxyl and/or hydroxy group are preferably used.

Preferable binder resins having an acidic group may include those obtained by copolymerizing a polymerizable monomer having an ethylenical double bond selected from acrylic esters, methacrylic esters, styrene, vinyl acetate, vinyl chloride, N-vinylpyrrolidone, acrylamide and the like and a polymerizable monomer having an acidic group and an ethylenical double bond such as acrylic acid, methacrylic acid, p-stylenecarboxylic acid, p-stylenesulfonic acid, p-hydroxystylene and maleic anhydride.

The amount of the binder resin having an acidic group in the composition per one part by weight of the photosensitive resin (or photosensitive polymerizable monomer) may preferably be 0.5-4 parts by weight, more preferably 1-3 parts by weight.

The solvent used in the ink composition to be used in the photolithographic method may be at least one oil-base medium selected from fatty acid esters, ketones, aromatic compounds, alcohols, glycols, glycerin, alkyleneglycol, monoalkylethers, alkyleneglycoldialkylethers, ethers and nitrogen containing polar organic solvents.

The weight amount of the solvent may be 3-40 times, preferably 4-15 times of the total weight amount of the components of the ink composition other than the solvent.

The red ink composition for color filter of the present invention may be manufactured by mixing and dispersing the azo compound of formula [1], the resin components, the solvent and the other additives uniformly with an equipment such as bead mill, ball mill, sand mill, twin-roll mill, triple-roll mill, homogenizer, kneader and shaker, and adjusting the viscosity of thus obtained mixture with aforementioned solvent or the like.

If desired, a dispersing agent may be added to the composition so that the components are well dispersed in a short time. Preferred dispersing agents may include cationic, anionic, nonionic and amphoteric surfactants, silicone additives, pigment additives, silane coupling agents, titanium coupling agents and the like. Two or more of those dispersing agents may be used in combination.

Examples of the dispersing agents are illustrated below.
Any compound which can act as a surface active agent may be used as a surfactant with no limitation. Examples of surfactants may include anionic surfactants such as alkane sulfonate, linear-alkylbenzene sulfonate, branched-alkylbenzene sulfonate, alkylnaphthalene sulfonate, naphthalenesulfonate-formaldehyde condensate, alkyl sulfate, polyoxyethylenealkylether sulfate, alkyl phosphate, polyoxyethylenealkylether phosphate and aliphatic monocarboxylate; cationic surfactants such as alkylamine salt and quaternary amine salt; nonionic surfactants such as glycerine fatty acid ester, sorbitan fatty acid ester, polyoxyethylenealkyl ether, polyoxyethylenealkylphenyl ether, polyethyleneglycole fatty acid ester and polyoxyethylenesorbitan fatty acid ester; and amphoteric surfactant such as alkylbetaine, polymer surfactants which may be cationic, anionic, nonionic or amphoteric.

Examples of the silicone additives may include polyalkylsiloxane, polyalkylphenylsiloxane, polyorganosiloxane, polydimethylsiloxane, polyorganosiloxane-polyehter copolymer, polyfluorosiloxane and organosilane. Two or more of those silicone additives may be used in combination.

The term "pigment additive" refers a pigment derivative having a pigment structure with a substituent such as basic, acidic, linear alkyl, branched alkyl or polyoxyethylene group. Preferred pigment structures may include those of monoazo, disazo, benzimidazolone, condensed-azo, azo-lake, anthraquinone, diketopyrrolopyrrole, quinacridone, isoindoline, isoindolinone, perinone and perylene pigments.

Among the above described pigment additives, an azo pigment having the azo structure and an above described substituent is preferable in view of the good permissibility with the monoazo compound of formula [1].

Examples of silane coupling agents may include vinyltrimethoxysilane, vinyltriethoxysilane, vinyltris(β-methoxyethoxy)silane, β-(3,4-epoxycyclohexyl) ethyltrimethoxysilane, γ-glycidoxypropyltrimethoxysilane, γ-glicydoxypropylmethyldiethoxysilane, γ-aminopropyltriethoxysilane, N-phenyl-γ-aminopropyltrimethoxysilane, γ-methacryloxypropyltrimethoxysilane, vinyltriacetoxysilane, methyltrimethoxysilane, dimethyldimethoxysilane, phenyltrimethoxysilane, diphenyldimethoxysilane, methyltriethoxysilane, dimethyldiethoxysilane, phenyltriethoxysilane, diphenyldiethoxysilane, n-butyltrimethoxysilane, isobutyltrimethoxysilane, trimethylmethoxysilane, hydroxypropyltrimethoxysilane, n-hexadecyltrimethoxysilane and n-octadecyltrimethoxysilane.

Examples of titanium coupling agents may include isopropyltri(N-aminoethylaminoethyl)titanate and dibutoxybistriethanolamine titanate.

The amount of the above described dispersing agent in the composition may vary dependent on the type of the agent employed and preferably, 0.1-100 parts by weight, especially, 0.5-80 parts by weight of the agent per 100 parts by weight of the monoazo compound of formula [1] may be used.

The manner upon adding the dispersing agent to the composition is not limited and may be along with a known manner for manufacturing an ink composition to be used in the photolithographic method. Preferably, the dispersing agent and the monoazo compound of formula [1] are dispersed in a part of the solvent to give pigment dispersion and then, mixing the pigment dispersion with the resin component and the remaining solvent.

In addition to the aforementioned components, the ink composition to be used in the photolithographic method may further comprise additives such as wetting agent, antifading agent, emulsion stabilizer, ultraviolet absorber, preservative, mildewproofing agent, pH adjuster, surface tension adjuster, anti-foaming agent, viscosity modifier, and dispersion stabilizer, if desired.

In order to form a red color filter on the display substrate with the red ink composition for color filter of the invention, a known photolithographic method may be employed. For example, red color filter can be obtained by uniformly applying the ink composition of the present invention on the display substrate by means of a known method such as printing, spraying, bar-coating, roll-coating or spin coating; heating the substrate so that the solvent in the ink composition is removed, irradiating the color filter pattern on the display substrate with high-pressure mercury lamp or the like, developing the pattern under alkaline condition and then, washing and baking the substrate.

2) Ink-jet method
In the case the color filter is formed by means of the ink-jet method, the resin component of the ink composition of the invention may be any of those used in a conventional ink composition for ink-jet printing. Monomers of photosensitive resins and/or thermosetting resins are preferably used.

As photosensitive resins, acrylic, methacrylic and epoxy resins may be used and acrylic and methacrylic resins are preferable. Preferred examples of acrylic and methacrylic resins may include a combination of a photopolymerizable monomer selected from acrylic ester, methacrylic ester, urethane acrylate, urethane methacrylate, acrylic amide, methacrylic amide, alkylacrylate, benzylmethacrylate, benzylacrylate, aminoalkylmethacrylate and the like and a photopolymerization initiator selected from derivatives of benzophenone, acetophenone, benzoin, benzoin ether, thioxanthone, anthraquinone, naphthoquinone and triazine, and the like. In addition to the above described photopolymerizable monomers, the other photopolymerizable monomer having a hydrophilic group such as acrylic acid, methacrylic acid, maleic acid and vinyl acetate may be added to the composition.

Examples of the thermosetting resins may include melamine, urea, alkyd, epoxy, phenol and cyclopentadien resins.

In the case the color filter is formed by the ink-jet method, the solvent used in the composition of the invention may be either oil base or water base medium. Water base mediums are preferable. The preferably used water base medium is water or a mixture of water and a water-soluble organic solvent, and the mixture of water and water soluble organic solvent is especially preferable. Deionized solvent is preferable.

Oil base medium which may be used in the ink composition of the present invention is not limited and for example, the above disclosed oil base medium used for manufacturing a ink composition to be used in the photolithographic method.

The solvents used in the water base medium is water soluble and may be selected from alcohols, ketones, ethers, glycols, glycerin, alkyleneglycolmonoalkylethers, alkyleneglycoldialkylethers, alkanol amines and nitrogen containing polar organic solvents. Those water soluble solvents may be used solely or in combination of two or more.

The amount of the solvent in the composition is not specifically limited and may be determined so that the viscosity of the ink composition at the room temperature is 20mPa.s or less, preferably, 10mPa.s or less.

The ink composition of the present invention to be used in the ink-jet method may be manufactured in the same manner as the composition to be used in the photolithographic method, i.e. mixing and dispersing the components. Upon dispersing, a dispersing agent may be added to the composition as is in the case of the composition for photolithographic method.

In addition to the above described components, the ink composition of the invention to be used in the ink-jet method may further comprise further additives known to the art such as wetting agent, antifading agent, emulsion stabilizer, ultraviolet absorber, preservative, mildewproofing agent, pH adjuster, surface tension adjuster, anti-foaming agent, viscosity modifier, and dispersion stabilizer, if desired.

In order to form a red color filter with thus obtained red ink composition of the invention, any known ink-jet procedure for manufacturing color filter may be employed. For example, red color filter can be obtained by forming desired color filter pattern of ink droplets on the display substrate, drying the subject, and subjecting the substrate with heating or light irradiation so that the color filter pattern on the substrate is set and becomes coating.

In the above, red color filters obtained by the photolithographic method and the ink-jet method are illustrated, the red color filter of the present invention may be those prepared by any other method.

In the case where the red color filter is formed by a method other than photolithographic or ink-jet method, for example, various printing method including off-set printing or the like, red ink composition for color filter and the resulting filter are still within the scope of the invention as long as the ink composition comprises aforesaid resin component and solvent in addition to the monoazo compound of formula [1] as a colorant.

In such case, resin components, solvents and additives in the composition as well as the process for forming the color filter using the composition may be determined along with the conventional products and are not limited to those mentioned above with respect to the photolithographic and ink-jet methods.

Thus obtained red color filter of the present invention may provides image elements together with G(green) and B(blue) color filter patterns which are formed in a conventional manner. This red color filter is highly transparent and exhibits good spectroscopic property and therefore, can provide liquid crystalline display with excellent spectroscopic property which exhibits clear image with less quenching and polarizing effects.

### EFFECT OF THE INVENTION

The red color ink composition for color filter of the present invention can provide color filter with highly transparent coating film wherein the organic pigment is dispersed well.

### BRIEF DESCRIPTION OF THE DRAWINGS

Fig 1: A graph wherein optical transmittances of the optically transparent colored films obtained in Example 1 and Comparative Examples 1 and 2 are compared.
Fig. 2: A graph wherein optical transmittances of the optically transparent colored films obtained in Example 2 and Comparative Examples 1 and 2 are compared.

### [EXAMPLE 1]

The instant application will be further illustrated with reference to the following examples. These examples are not to be construed to limit the scope of the invention.

### (Example 1)

### PREPARATION OF OPTICALLY TRANSPARENT COLORED FILM BY MEANS OF PHOTOLITHOGRAPHIC METHOD

The pigment of formula [I] was used. The components shown in table 1 were put in a 70cc wide-mouth glass bottle and the bottle was shaken for 9 hours with a shaking-dispersing devise (DAS200, LAU) to give dispersion of the pigment. The components shown in table 2 were added to the dispersion and shaken for another 30 minutes to give red ink composition to be used in the photolithographic method.

### [Chemical Formula 4]

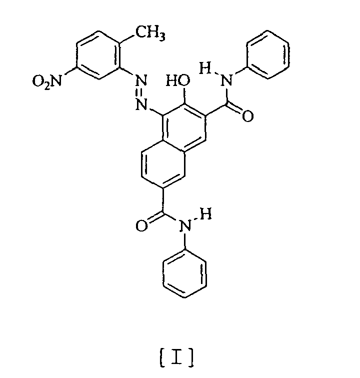

**[Table 1]**

| | |
|---|---|
| pigment | 0.6g |
| 1,2-propandiol 1-monomethylether-2-acetate (Tokyo Chemical Industry Co., Ltd.) | 5.0g |
| zirconia beads(Φ0.3mm) | 10g |

**[Table 2]**

| | |
|---|---|
| photosensitive resin (CYCLOMER P200, Dicel Chemical Industries, Ltd.) | 2.5g |
| pentaerythritoltetraacrylate(Aldrich) | 0.2g |
| 2-benzyl-2-dimethylamino-4'-morpholino- butyrophenone (Aldrich) | 0.05g |
| 2,4-diethyl-9H-thioxanthen-9-one (Tokyo Chemical Industry Co., Ltd.) | 0.05g |
| 1,2-propanediol-1-monomethylether-2-acetate (Tokyo Chemical Industry Co., Ltd.) | 0.8g |
| cyclohexanone (Tokyo Chemical Industry Co., Ltd.) | 0.2g |

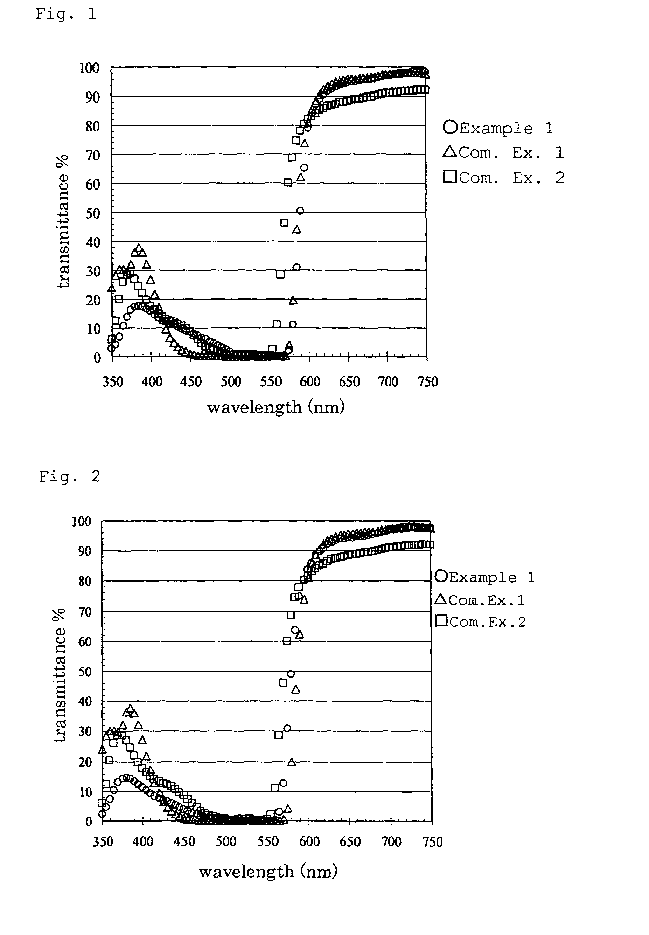

Thus obtained ink composition was applied on a slide glass with a bar-coater Rod No. 10 and the slide glass was dried for 5 minutes in an oven at 80°C to give coated film of ink
An appropriate masking was applied on a part of thus obtained coated film and the film was then exposed to a high-pressure mercury lamp with an irradiation condition of 200mJ/cm². After that, the film was developed using 0.5% aqueous sodium carbonate at 25°C and dried for 20 minutes in an oven at 220°C to give optically transparent colored film. The optical transmittance of the obtained film was determined with a spectrophotometer (U-3310, Hitachi, Ltd.). Result is shown in Fig. 1. In addition, a wavelength at which the film exhibited 5% transmittance was determined within the wavelength range of 540-610nm. Result is shown in Table 5.

### [Example 2]

Red color ink composition of example 2 was prepared in the same manner as Example 1 except for using the pigment of formula [II] in stead of the formula [I], and adjusting the amount of the solvent, 1,2-propandiol 1-monomethylether 2-acetate to the amount shown in table 3. The optically transparent colored film was prepared using the obtained ink composition and the optical transmittance of the film was determined. Result is shown in Fig. 2. In addition, a wavelength at which the film exhibited 5% transmittance was determined within the wavelength range of 540-610nm. Result is shown in Table 5.

### [Examples 3-24]

Red color ink compositions of examples 3-24 were prepared in the same manner as Example 1 except for using the pigment shown by formulae [III]-[XXIV] respectively in stead of formula [I] and adjusting the amount of the solvent, 1,2-propandiol 1-monomethylether 2-acetate to the amount shown in table 3. The optically transparent colored films were prepared using thus obtained ink compositions. A wavelength at which the film exhibited 5% transmittance was determined within the wavelength range of 540-610nm. Results are shown in Table 5.

**[Table 3]**

| Amount of 1,2-propandiol 1-monomethylether 2-acetate in the composition | | | | |
|---|---|---|---|---|
| Example 2 | Example 3 | Example 4 | Example 5 | Example 6 |
| 5.0g | 8.75g | 6.25g | 5.0g | 10g |
| Example 7 | Example 8 | Example 9 | Example 10 | Example 11 |
| 5.0g | 5.0g | 5.0g | 5.0g | 5.0g |
| Example 12 | Example 13 | Example 14 | Example 15 | Example 16 |
| 5.0g | 5.5g | 5.0g | 5.0g | 5.0g |
| Example 17 | Example 18 | Example 19 | Example 20 | Example 21 |
| 5.0g | 5.0g | 6.0g | 5.0g | 5.0g |
| Example 22 | Example 23 | Example 24 | | |
| 5.0g | 5.0g | 5.0g | | |

### [Example 25]

The ink composition of Example 25 was prepared in the same manner as Example 2 except for adding 0.5g of a dispersing agent, Substrate Wetting BYK-161 (BYK-Chemie Japan KK) to 0.6g of the pigment and shaking the mixture for 6 hours. As a result, optically transparent colored film with properties equivalent to those of Example 2 was obtained.

### [Examples 26-31]

The ink compositions of Examples 26-31 were prepared in the same manner as Example 1 except for adding a dispersing agent shown in table 4 to the pigment and shaking the mixture in the shaking-dispersing devise (DAS200, LAU) for 6 hours. As a result, optically transparent colored films with properties equivalent to those of Example 1 were obtained.

**[Table 4]**

| dispersing agent and added amount of the same | | |
|---|---|---|
| | dispersing agent | amount |
| Example 26 | pigment additive (SOLSPERSE 22000, Zeneca) | 0.012g |
| Example 27 | silicone additive (PAINTAD 32, Dow Corning Asia) | 0.006g |
| Example 28 | silicone additive (PAINTAD 57, Dow Corning Asia) | 0.0012g |
| Example 29 | Silicone additive (DK Q8-8011, Dow Corning Asia) | 0.0012g |
| Example 30 | surfactant (DISPERLON DA-325, Kusumoto Chemicals, Ltd.) | 0.264g |
| Example 31 | surfactant (DISPERLON DA-1860, Kusumoto Chemicals, Ltd.) | 0.132g |

### [Chemical Formula 5]

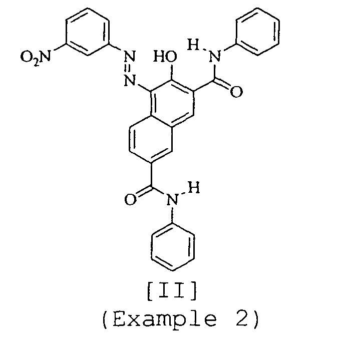

### [Chemical Formula 6]

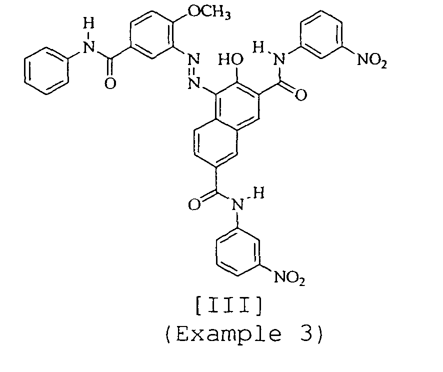

### [Chemical Formula 7]

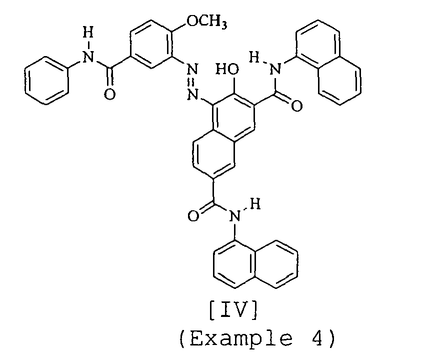

### [Chemical Formula 8]

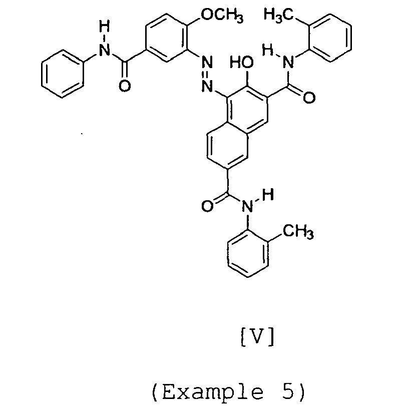

### [Chemical Formula 9]

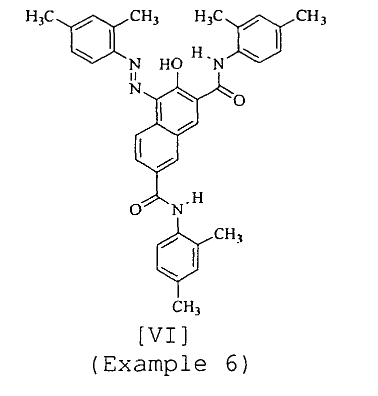

### [Chemical Formula 10]

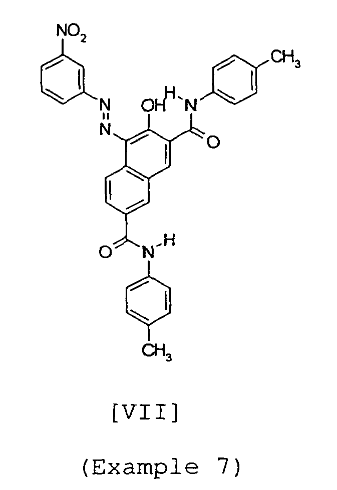

### [Chemical Formula 11]

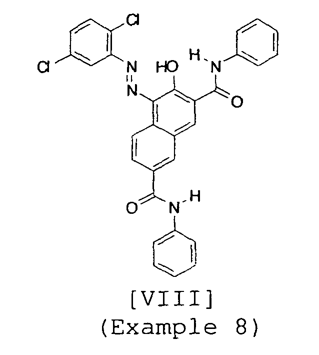

### [Chemical Formula 12]

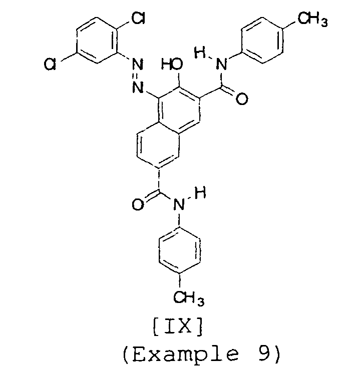

### [Chemical Formula 13]

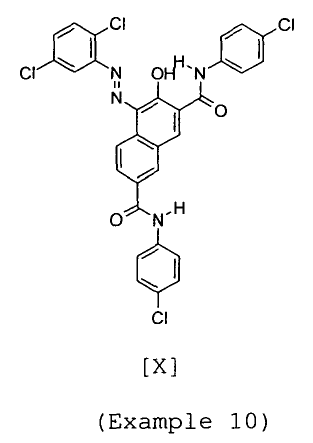

### [Chemical Formula 14]

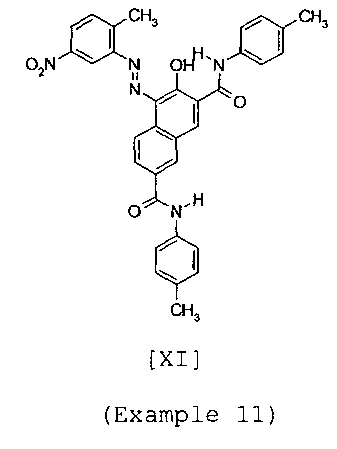

### [Chemical Formula 15]

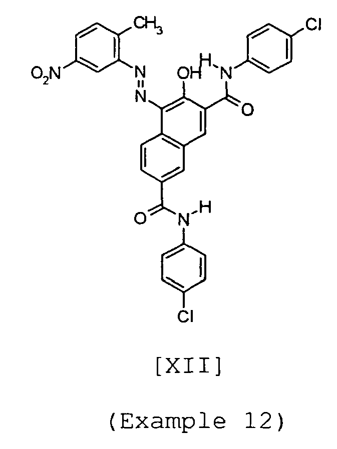

### [Chemical Formula 16]

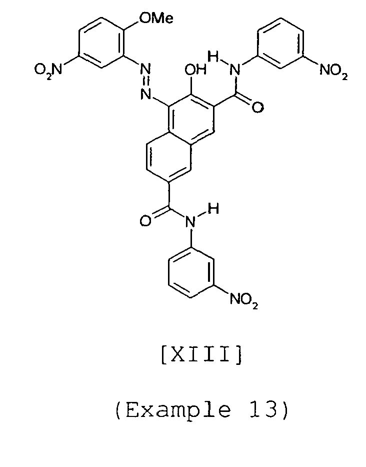

### [Chemical Formula 17]

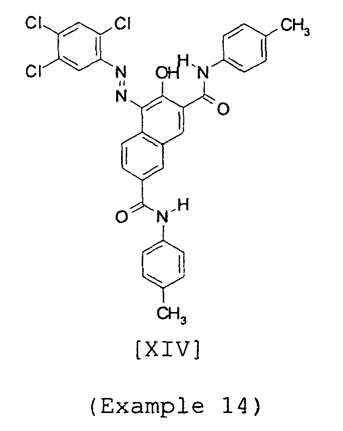

### [Chemical Formula 18]

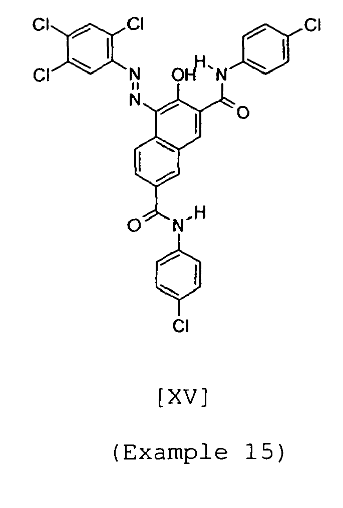

### [Chemical Formula 19]

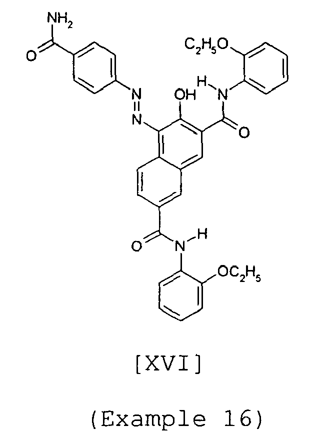

### [Chemical Formula 20]

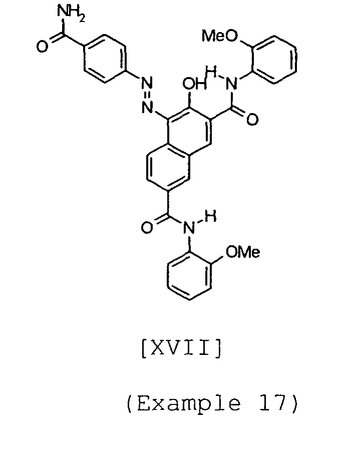

### [Chemical Formula 21]

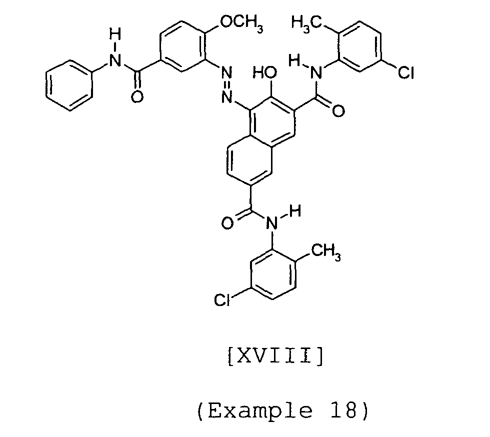

### [Chemical Formula 22]

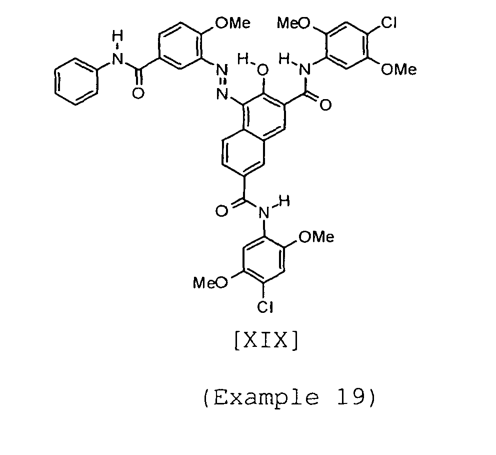

### [Chemical Formula 23]

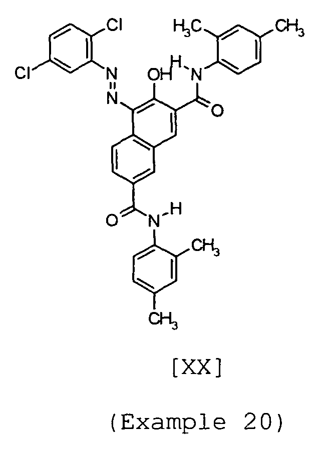

### [Chemical Formula 24]

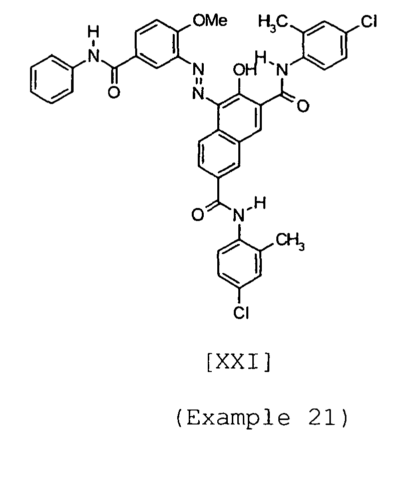

### [Chemical Formula 25]

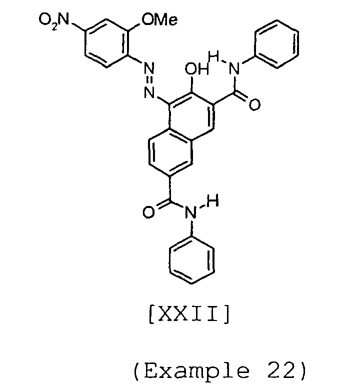

### [Chemical Formula 26]

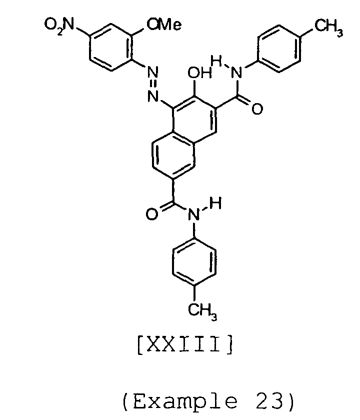

### [Chemical Formula 27]

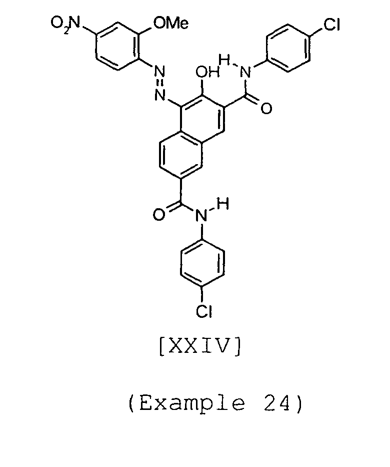

### Comparative Examples 1 and 2

Colored films of comparative examples 1 and 2 were prepared in the same manner as Example 1 except for C. I.Pigment Red 254 (IRGAPHORE DPP RED, Ciba Specialty Chemicals) (in comparative example 1) and pigment of formula [XXV] (comparative example 2) were used instead of the pigment of formula [I]. The optical transmittance of thus obtained colored film was determined. Results are shown in Figs. 1 and 2. In addition, a wavelength at which the film exhibited 5% transmittance was determined within the wavelength range of 540-610nm. Results are shown in Table 5.

### [Chemical Formula 28]

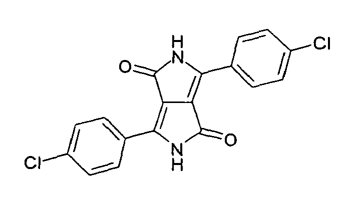

C.I. Pigment Red 254

### Comparative Example 1

### [Chemical Formula 29]

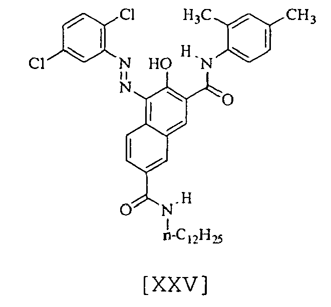

### Comparative Example 2

**[Table 5]**

| wavelength at which the film exhibited 5% transmittance | | | | |
|---|---|---|---|---|
| Example 1 | Example 2 | Example 3 | Example 4 | Example 5 |
| 577nm | 565nm | 541nm | 573nm | 569nm |
| Example 6 | Example 7 | Example 8 | Example 9 | Example 10 |
| 570nm | 566nm | 561nm | 558nm | 564nm |
| Example 11 | Example 12 | Example 13 | Example 14 | Example 15 |
| 580nm | 576nm | 583nm | 549nm | 551nm |
| Example 16 | Example 17 | Example 18 | Example 19 | Example 20 |
| 552nm | 543nm | 586nm | 596nm | 556nm |
| Example 21 | Example 22 | Example 23 | Example 24 | |
| 540nm | 610nm | 589nm | 595nm | |
| Com. Ex. 1 | Com. Ex. 2 | | | |
| 576nm | 559nm | | | |

As is seen from Figs. 1 and 2, the optically transparent colored film or color filter prepared by using the red ink composition for color filter of the present invention comprising a compound of formula [I] or [II] as colorant exhibited high transmittance in the wavelength range of red light, 540-750nm; the transmittance was higher than the film obtained by comparative example 2, and equivalent to the film obtained by comparative example 1.

Further, the optically transparent colored film prepared by using the red ink composition for color filter of the present invention exhibited much lower transmittance in the wavelength range of blue light, 350-400nm. The transmittance was lower than the films of comparative examples 1 and 2. That is, the filter can display red color with high color purity.

The optically transparent colored films or color filters prepared by using the red ink composition for color filter of the present invention comprising colorants of formulae [I]-[XXIV] exhibit various hues within red color, the wavelength at which the films of the examples exhibited 5% transmittances are the same as, or shifted to shorter or longer wavelength from, that of the comparative examples.

According to the present invention, the red filter can be manufactured so that the wavelength at which the optical transmittance of the film is dramatically changed is adjusted to a desired wavelength in the range from about 540nm to about 610nm by selecting the structure of the monoazo compound represented by general formula [1] and therefore, a red color filter with optimal red color hue based on the wavelength of the display's back light can be obtained.

### [Evaluation of the heat resistance]

The optically transparent colored films obtained in Examples 10, 17, 22 and 24 were subjected to the heat resistance test.

### <Heat Resistance Test>

The optically transparent colored film was heated at 250°C for 60 minutes under atmospheric pressure and the color difference (ΔE*_{ab}) before and after heating was determined by spectrophotometer (Macbeth Coloreye-3000, Sakata Inx Corporation). Results are shown in Table 6.

[Table 6]

| Heat Resistance ΔE*_{ab} | | | | |
|---|---|---|---|---|
| Example 10 | Example 17 | Example 22 | Example 24 | Com. Ex. 1 |
| 0.6 | 0.6 | 0.6 | 0.4 | 0.8 |

The optically transparent colored film (color filter) prepared by using the ink composition for color filter of the present invention comprising pigments of formulae [X], [XVII], [XXII] or [XXIV] exhibited a heat resistance equivalent or even superior to that of obtained by the comparative example 1.

### INDUSTRIAL APPLICABILITY

The red ink composition for color filter of the present invention may be used for manufacturing color liquid crystalline displays in personal computer, television, game machine and the like.

## Claims

1. A red ink composition for color filter, comprising a monoazo compound represented by formula [I]: 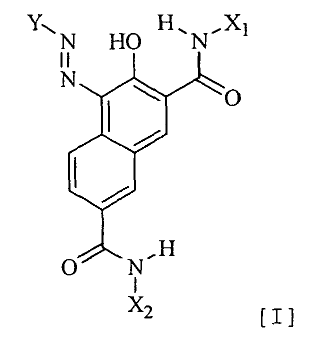 wherein, X₁, X₂ and Y are selected from the group consisting of an optionally substituted aromatic group and an optionally substituted heterocyclic group having conjugated double bonds,
a resin component and a solvent.

2. The red ink composition for color filter according to Claim 1, wherein X₁ and X₂ are same group.

3. The red ink composition for color filter according to Claim 1 or 2, wherein X₁ and X₂ are optionally substituted phenyl or naphthyl groups.

4. The red ink composition for color filter according to any of Claims 1-3, wherein the amount of the monoazo compound of formula [1] per one part by weight of the resin component is 0.01-2 parts by weight.

5. The red ink composition for color filter according to any one of Claims 1-4, wherein the resin component is a photosensitive resin.

6. The red ink composition for color filter according to any one of Claims 1-5, which further comprises at least one dispersing agent selected from the group consisting of surfactants, silicone additives, pigment additives, silane coupling agents and titanium coupling agents.

7. A method for preparing the red color ink for color filter recited in Claim 6, which comprises dispersing at least one dispersing agent selected from the group consisting of surfactants, silicone additives, pigment additives, silane coupling agents and titanium coupling agents and the monoazo compound of formula [1] in a part of the solvent to give pigment dispersion, and
mixing the pigment dispersion with the resin component and the remaining solvent.

8. Red color filter which is obtainable by using the red ink composition for color filter according to any one of claims 1-6.

9. The red color filter of Claim 8, which is obtained by means of photolithographic method or ink-jet method.
